# EUROPEAN PATENT SPECIFICATION

(11) **EP 4 714 831 B1**
(45) Date of publication and mention of the grant of the patent: **09.09.2026**
(21) Application number: 25196896.2
(22) Date of filing: 20.08.2025
(51) Int. Cl.: B64D 37/04, B64D 37/30, B64C 3/34

(54) **CRYOGENIC FUELED AIRCRAFT**
KRYOGEN BEFEUERTES LUFTFAHRZEUG
AERONEF CRYOGENIQUE ALIMENTE

(30) Priority: 20.09.2024 GB 202413880
(43) Date of publication of application: 25.03.2026
(73) Proprietor: Rolls-Royce plc, London N1 9FX (GB)
(72) Inventor: Tristanto, Indi Himawan, Derby, DE24 8BJ (GB); Ramsay, Joseph, Derby, DE24 8BJ (GB); Moxon, Matthew, Derby, DE24 8BJ (GB); Robinson, William, Derby, DE24 8BJ (GB); Shahpar, Shahrokh, Derby, DE24 8BJ (GB)
(74) Representative: Rolls-Royce plc

(56) References cited:
- CN-U- 209 382 288
- DE-B3- 102021 107 184
- DE-U- 1 963 699
- FR-A1- 3 135 966
- US-A- 2 984 439

## Description

### TECHNICAL FIELD

This disclosure relates to a cryogenic fuelled aircraft.

### BACKGROUND

In order to limit emissions of carbon dioxide, use of hydrogen as an alternative to hydrocarbon fuel in gas turbine engines has historically only been practical in land-based installations. Similarly, cryogenic methane has also been studied. In order to provide the necessary fuel energy density to provide adequate range, cryogenic liquid and / or supercritical hydrogen and methane fuelled airliners have recently been proposed. In view of the still relatively low density of liquid and supercritical hydrogen and methane, storage of the necessary quantity of fuel to enable a required range is difficult. There are also safety concerns with regard to passenger aircraft, in view of the high flammability of hydrogen and methane, and cryogenic temperatures of the fuel.

French patent application FR 3 135 966 discloses an aircraft comprising a fuselage, wings, several propulsion units positioned below the wings and connected to them, and several fuel tanks connected to the wings, positioned above them and offset towards the rear relative to their trailing edges.

German patent application DE 10 2021 107184 discloses a tank arrangement for an aircraft with at least one external tank for receiving an energy carrier, in particular a cryogenic energy carrier, and at least one engine to be supplied with the energy carrier via the tank for propelling the aircraft in a propulsion direction. The tank is connected to a wing of the aircraft via a connecting element and is spaced apart from the wing. The tank extends at least predominantly between the wing and a tail area of the aircraft and/or wherein the tank extends at least predominantly away from the wing in the opposite direction to the propulsion direction.

Chinese utility model CN 209 382 288 U discloses an airplane external auxiliary fuel tank. The auxiliary fuel tank mounting structure comprises an auxiliary fuel tank body and an auxiliary fuel tank mounting dorsal fin for mounting the auxiliary fuel tank body on an airplane, wherein the auxiliary oil tank body is a cavity with a large front part, a concave middle part and a smaller rear part; the cavity is defined by the left box body and the right box body, the left box body and the right box body are the same in structure and are symmetrical about the central axis of the box bodies. The area distribution of the cavity along the heading direction is complementary with the distribution of the section area of the airplane, and the high-speed flight resistance of the whole airplane after mounting is effectively reduced. The auxiliary fuel tank mounted dorsal fin arranged on the auxiliary fuel tank body can ensure the course stability of the auxiliary fuel tank; according to the auxiliary oil tankbody, an empennage is omitted, the stability and the safety of the throwing movement of the auxiliary oil tank body are obtained by coordinating the configuration of the appearance and the gravity center of the tank body, and after throwing, the rear part of the tank body has a larger appearance and a larger arm of force to provide certain stability in yawing and pitching directions.

German utility model DE 19 63 699 U discloses a wing-tip mounted fuel tank having a fuselage facing concave surface aft of the leading edge of the wing. The tank is directly joined to the wing surface.

United States patent application US 2984439 also discloses a wing-tip mounted fuel tank having a convex central section aft of the leading edge of the wing. Similarly, the tank is directly joined to the wing surface.

### SUMMARY

According to a first aspect of the invention there is provided an aircraft comprising a wing and a fuel tank mounted above the wing, spaced from an upper surface of the wing; wherein
a first portion of a lower surface of the tank comprises a concave profile extending in a longitudinal direction above a convex upper surface portion of the wing; and
the fuel tank comprises a second portion of the lower surface of the tank forward of the first portion, which comprises a convex profile in a longitudinal direction, characterised in that:
   the lowermost portion of the second portion of the lower surface is provided at a longitudinal position forward of a leading edge of the wing.

The inventors have found that aerodynamic drag at transonic speeds for an aircraft having an above-wing mounted fuel tank can be considerably reduced using the disclosed design. In particular, the concave portion on the lower surface allows for initial acceleration of the flow after the wing leading edge, but reduces further acceleration due to a decreased channel effect between the lower surface of the fuel tank and the upper surface of the wing. Accordingly, relative Mach number in this region is reduced compared to a wholly convex fuel tank, thereby reducing wave-drag.

The fuel tank may be configured to store one of hydrogen and liquid methane. Methane and hydrogen present challenges for storage onboard aircraft in view of their low density and high flammability. Accordingly, by providing the fuel storage above the wing in accordance with the presently disclosed design, a safe, low drag fuel storage solution is provided.

The fuel tank may be configured to store the fuel as a liquid. Both hydrogen and methane require cryogenic temperatures in order to be stored as liquids, which provides further storage challenges in view of bulky insulation requirements and the risk of boiling within the tank where the tank is warmed by thermal exchange with the environment. The presently disclosed design provides a design having a minimal external surface area, which assists in reducing weight, heat exchange with ambient air, and aerodynamic drag.

The fuel tank may comprise a third portion of the lower surface of the tank aft of the first portion, which may comprise a convex profile in a longitudinal direction. A lowermost portion of the third portion of the lower surface may be provided at a longitudinal position aft of a trailing edge of the wing.

The fuel tank may comprise a first portion of an upper surface comprising a convex portion located above a convex portion of the upper surface of the wing. The inventors have found that the convex portion in this location accelerates the flow, and hence decrease the negative lift generated by the fuel tank.

The fuel tank may comprise a second portion of the upper surface of the tank forward of the first portion, which may comprise a concave profile in a longitudinal direction. A lowermost portion of the second portion of the upper surface may be provided at a longitudinal position forward of the leading edge of the wing.

The fuel tank may comprise a third portion of the upper surface of the tank aft of the first portion, which may comprise a concave profile in a longitudinal direction. A lowermost portion of the third portion of the upper surface may be provided at a longitudinal position aft of the trailing edge of the wing. Advantageously, the shaping of the upper surface of the fuel tank provides acceleration of airflow on the upper surface, which produces positive lift. This at least partly offsets the net negative lift produced by the tank, and so reduces the lift that must be generated by the wing, and thus overall aircraft weight and lift induced drag. Additionally, the shaping of the upper surface helps maximise internal volume, while minimising drag.

The fuel tank may comprise a concave side surface when viewed from above. The fuel tank may comprise a first concave side surface facing a side of a fuselage of the aircraft, and may comprise a second concave side surface on an opposite side of the fuel tank from the first side surface. Advantageously, shocks caused by interaction between the fuel tank and aircraft fuselage are also reduced, thereby again reducing drag.

The first concave side surface may be provided forward of the second concave side surface.

The wing may comprise a supercritical wing profile.

In an embodiment, the upper fuel tank surface may consist of a convex curve in a longitudinal direction, with no concave surface. The fuel tank may define a positive camber.

### BRIEF DESCRIPTION OF THE DRAWINGS

Embodiments will now be described by way of example only with reference to the accompanying drawings, which are purely schematic and not to scale, and in which:
Figure 1a shows an isometric view from forward and starboard of a first cryogenic-fuelled airliner comprising hydrogen-fuelled turbofan engines;
Figure 1b is a plan view from above of part of the airliner of figure 1 a;
Figure 2 is a cross-sectional side view through part of the airliner of figures 1a and 1b, showing relative Mach number isolines;
Figure 3a is side view from a starboard side of part of a second airliner;
Figure 3b is a plan view from above of part of the airliner of figure 3a; and
Figure 4 is a cross-sectional side view through part of the airliner of figures 3a and 3b, showing relative Mach number isolines;
Figures 5a to 5c are isometric, plan and side views respectively of a third airliner; and
Figure 6 is a cross-sectional side view through part of the airliner of figures 5a to 5c, showing relative Mach number isolines.

### DETAILED DESCRIPTION

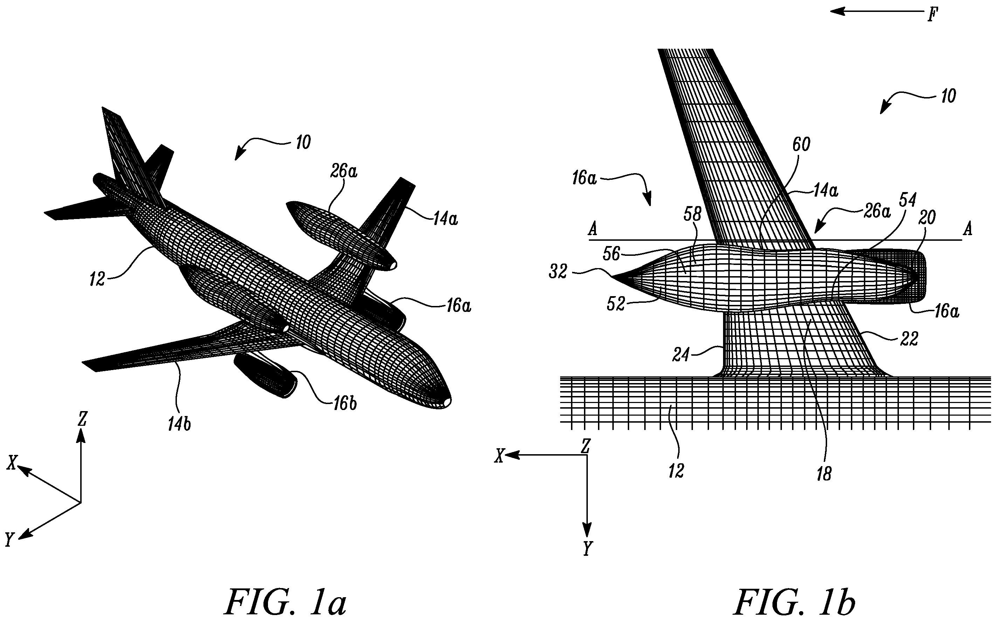

A cryogenic-fuelled airliner 10 is illustrated in Figures 1a and 1b. In this example, the airliner 10 is of substantially conventional tube-and-wing twinjet configuration with a central fuselage 12, wings 14a, 14b and substantially identical first and second underwing-mounted hydrogen fuelled turbofan engines 16a, 16b provided on a port and a starboard side respectively. The wings 14a, 14b are mounted relatively low on the fuselage sides, in a "low" or "mid" wing configuration, with the engine spar passing underneath a passenger cabin of the aircraft. An empennage is provided at an aft end of the aircraft and comprises vertical and horizontal tail surfaces (not shown).

Each wing 14a, 14b comprises upper and lower wing surfaces 18, 20 and leading and trailing edges 22, 24. As will be appreciated, the terms "upper" and "lower" refer to the normal orientation of the aircraft when on the ground. Similarly, the terms "forward" and "aft" will be understood to be relative to the normal direction of travel of the aircraft 10, i.e. "forward" would be understood to refer to being towards the oncoming airflow, and "aft" would be understood to refer to being away from the oncoming airflow.

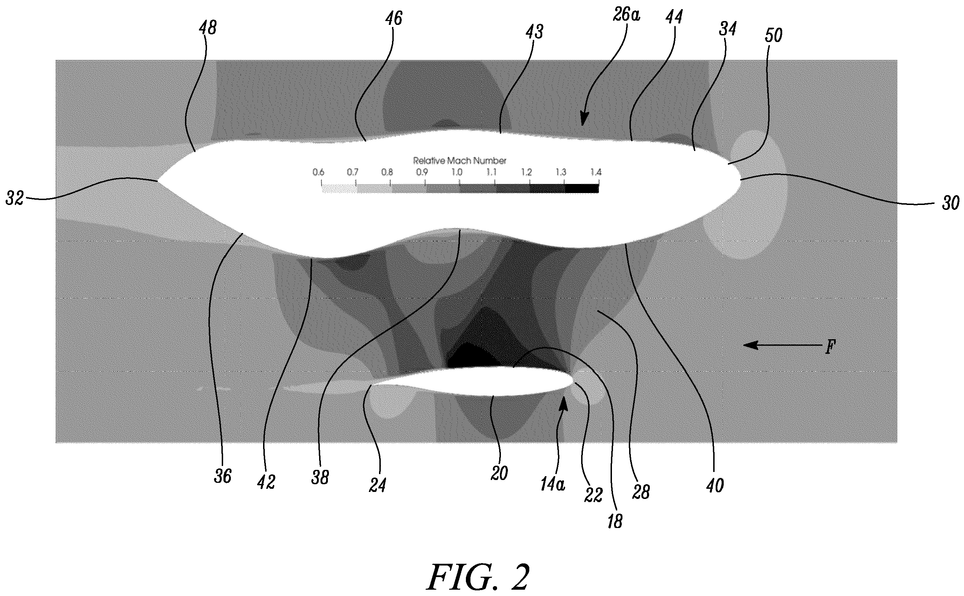

The wings 14a, 14b are of a "supercritical" type, as is well understood in the art. Supercritical wings are normally employed in aircraft which are configured to cruise at transonic speeds, i.e. between Mach 0.7 and 1. The supercritical wings 14a, 14b generally feature a flattened upper surface relative to a conventional subsonic design, a highly cambered or curved aft section featuring a "cusp", and greater leading edge radius compared to a conventional NACA aerofoil. The wing design shown in figures 1a, 1b and 2 are similar to those found on the Airbus A320.

First and second cryogenic storage tanks 26a, 26b are installed spaced from a respective upper wing surface 18. The term "cryogenic liquid fuel" will be understood to refer to fuel stored as a liquid at low temperatures, whereby the fuel would be in a gaseous phase when at standard atmospheric temperature and pressure. In the present embodiment, the tanks are configured to store cryogenic liquid hydrogen. However, in other embodiments, the fuel may comprise cryogenic methane, stored as either a liquid or a compressed, chilled gas. Each hydrogen storage tank 26a, 26b is a cryogenic hydrogen storage tank and thus stores the hydrogen fuel in either a liquid state or a cooled, supercritical state.

Figure 1b shows the relative positioning of one of the tanks 26a. As can be seen, the tank 26a is positioned at a span of the wing 14a which is spaced from a fuselage 12 side, generally directly above the port engine 16a. Accordingly, wing structure utilised for supporting the engine below the wing 14a can also be employed to mount the tank 26a above the wing 14a. Figure 1b is drawn to scale, and as such, shape features of the design can be ascertained by measurements taken from the drawing.

Figure 2 shows a cross-section through a centreline of the tank 26a, viewed along a vertical, longitudinal plane. Figure 2 is drawn to scale, and so again, shape features of the design can be ascertained by measurements taken from the drawing. In figure 2, a normal relative direction of airflow F is shown (going from right to left), i.e. air will flow in the direction F in forward flight.

As shown in figure 2, each tank 26a, 26b is spaced from the respective wing 14a, 14b to form a channel 28 therebetween and is mounted to an upper surface of the wing by a pylon (not shown). As will be understood, air flowing through this channel 28 is accelerated by the convex curved upper surface 18 of the wing 14a, 14b, such that air in this region may exceed Mach 1 in level flight where the aircraft is operated at high transonic speeds (Mach 0.7 to 1). Accordingly, shocks may form in this region, resulting in increased drag. It is an object of the present disclosure to reduce this drag, while maintaining lift performance of the wings 14a, 14b.

Accordingly, an aerodynamic profile of each tank 26a, 26b is optimised for the typical cruising speed of the aircraft 101. Figure 2 shows a longitudinal cross-section in the vertical plane through tank 26a at a mid-point of the tank 26a, along the line A-A in figure 1b.

The fuel tanks 26a, 26b are generally identical, and so details will be described in relation to one of them. In the embodiment shown, the tank 26a has a leading edge 30 which extends forward of a leading edge 22 of the wing 14a, and a trailing edge 32, which extends aft of a trailing edge 24 of the wing 14a. The fuel tank 26a defines upper and lower surfaces 34, 36 and has a complex curvature. The lower surface 36 defines a first region 38 having a concave curvature in the vertical plane along the longitudinal axis. This concave region 38 is located directly above the convex, upper surface 18 of the wing 14a at the spanwise position of the tank 26a. Accordingly, the tank lower surface 38 curves upwardly from a forward part to a rearward part, before curving downwardly again aft of a midsection.

Convex curved second and third regions 40, 42 are defined forward and aft respectively of the concave first region 38, which extend to the leading 30 and trailing edge respectively.

Accordingly, the concave region 38 and convex regions 40, 42 together define an upwardly extending, inward "waisted" region of the tank lower surface 36, such that the channel 28 defines an area of increased vertical spacing approximately directly vertical above a mid-chord point of the wing 14a relative to the channel vertical spacing at either the leading or trailing edge 22, 24. Although not wishing to be confined to theory, the front part of channel 28 (upstream of the waisted section 38) is designed to extend the high speed flow as far back as possible to maintain the flat aerodynamic load distribution of either a transonic or flat top aerofoil of the wing 14a, 14b. It should be noted that the main interaction effect of the tank 26a, 26b is the underlying wing aerofoil flow alteration (i.e. a supercritical aerofoil does not keep supercritical flow, the same goes with the flat top aerofoil). It should be noted that a high-speed flow (relative to the free stream, i.e. aircraft flight speed) in this portion of the channel would create a downward force on the tank (negative lift). Hence it is also desirable to prevent the speed from being too high. Additionally, the upper surface of the tank is shaped to recover the lost lift.

The waist terminates the front section at around the sonic speed. In fact the gap 28 between the waist and the wing 14a is designed to prevent the flow from become excessively supersonic. The waist essentially defines the furthest aft position the aerodynamic lift can occur. It is generally desirable for this location to be mid-chord, but this location does not have to be exactly mid-chord.

The aft section 42 essentially provides a diffusion zone that is aimed at minimising the shock strength which is formed when the supersonic flow re-joins the free stream subsonic flow. The space required for this diffusion is the main reason why the waist generally lies around the mid chord vicinity, although it may goes as far as 70% chord.

Accordingly, Figure 2 shows isolines of constant relative Mach number of airflow, where the aircraft is travelling at a forward airspeed of Mach 0.85, at an altitude of 39,000 feet, with a 1° angle of attack relative to the oncoming airflow. These are typical cruise conditions for a typical transonic airliner. As will be appreciated, the aerodynamic advantages associated with the invention will be expected to be present over a greater range of speeds, altitudes and angles of attack.

As can be seen, after an initial acceleration of airflow in the channel region 28 on the upper surface 34 of the wing 14a aft of the leading edge 22 to approximately a mid-chord region, airflow acceleration is then reduced. Accordingly, shocks in this region are reduced relative to a fuel tank having a convex curve in this region, thereby leading to reduced drag in the channel region, while wing lift is maintained. Accordingly, an aircraft having low drag and high lift is provided.

The upper surface 34 also comprises a complex curvature in order to provide low drag. The upper surface 34 comprises a first convex region 43 provided directly above a mid-chord region of the wing 14a at an approximate longitudinal mid-point of the fuel tank 26a, half way between the tank leading and trailing edges 30, 32. The convex region 43 is generally in the same longitudinal position as the concave region 38 of the lower surface 36. The first convex region 43 generally comprises a larger radius of curvature than the concave region 38. Accordingly, the tank 26a narrows at this mid-point.

Second and third concave regions 44, 46 are provided forward and rear respectively of the convex first portion 42 of the upper surface 34. Finally, a fourth convex region 48 is provided aft of the third convex region, and a fifth convex region 50 is provided forward of the second convex region, which meet with the trailing 32 and leading edges 30 respectively.

The described upper surface 34 curvature has also been found to provide improved aerodynamic performance compared to a baseline design. The convex surface 42 accelerates the flow in this region (as can be seen in figure 2) and hence decreases the negative lift produced by the fuel tank. Indeed, in simulations, the overall aircraft has been found to generate around 1% more lift than the baseline aircraft design without the fuel tank.

In total, aircraft drag using the optimised fuel tank design shows a drag reduction by 19% compared to an earlier design having an ogival tank design. Accordingly, aircraft range is greatly enhanced, while fuel consumption is reduced. Further testing shows that this reduction in drag is due to reduced interference drag between the aircraft wings 14a, 14b and fuel tanks 26a, 26b.

Referring again to figure 1b, the tanks 26a, 26b are also shaped in a longitudinally extending horizontal plane to reduce drag.

Each tank 26a, 16b comprises a first longitudinally extending side surface 52 provided on a side face of the tank 26a, 26b facing the fuselage 12, i.e. on the starboard side of the port tank 26a, and the port side of the starboard tank 26b. The longitudinally extending first side surface 52 comprises a concave region 54 provided adjacent the wing leading edge 22. A convex region 56 is provided adjacent the trailing edge 24 of the wing.

Similarly, each tank 26a, 26b comprises a second longitudinally extending side surface 58 provided on a side face of the tank 26a, 26b facing away from the fuselage 12 toward the respective wingtip, i.e. on the port side of the port tank 26a, and the starboard side of the starboard tank 26b. The longitudinally extending second side surface 58 comprises a concave region 60 provided adjacent the wing leading edge 22, and slightly aft of the convex region 56 of the first side surface. A convex region 56 is provided adjacent the trailing edge 24 of the wing, having a maximum lateral extent from a tank centreline A-A at a longitudinal position after of the trailing edge 34 of the wing.

Accordingly, a waisted section is provided at a forward end of the tank 26a close to the leading edge of the wing 14a, with a bulbous region provided aft of the trailing edge 24. Such an arrangement has been found by the inventors to reduce drag still further, but preventing supersonic flow in a channel between the tanks 26a, 26b and the fuselage 12, thereby reducing shocks and lowering drag compared to a baseline design.

As will be appreciated, the design can be optimised for different wing shapes, while maintaining the main features of the disclosed tank design.

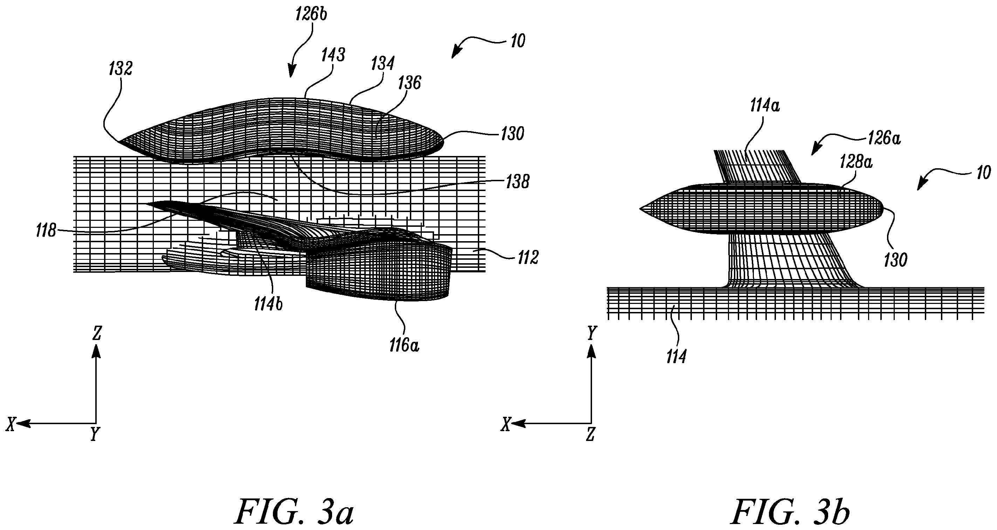

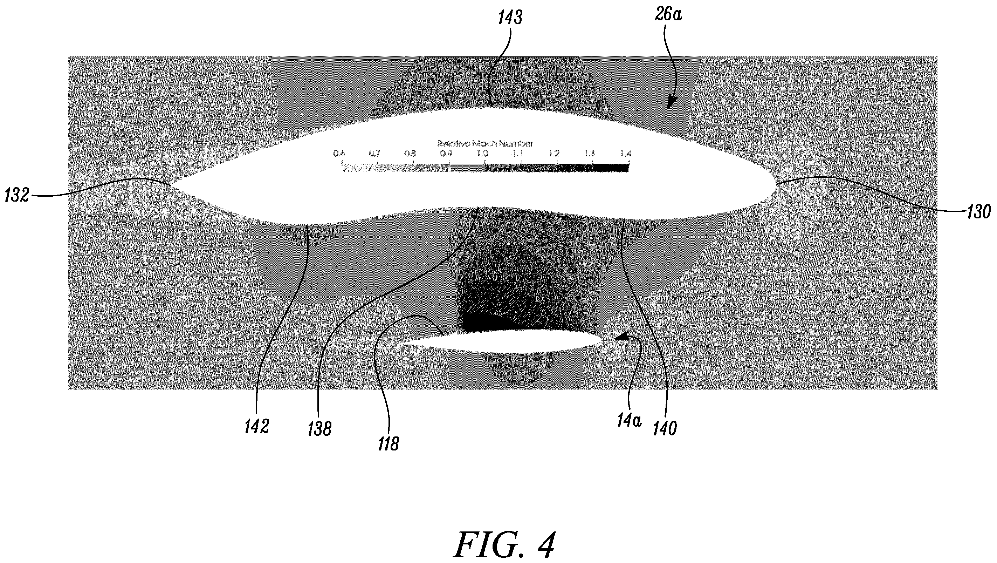

Figures 3a, 3b and 4 show a second tank 126a, 126b, which are generally similar in design to each other, and are mounted to a second aircraft 110 having a fuselage 112 and wings 114a, 114b. The second aircraft 110 is of similar configuration to the first aircraft 10, but has wings 114a, 114b of a different design. In this embodiment, the wings 114a, 114b is twisted to produce less lift relative to the wings 14a, 14b..

As can be seen in particular in figures 3a and 4, the tanks 126a, 126b each have leading and trailing edges 130, 132 and upper and lower surfaces 134, 136.

The lower surface 136 features a concave portion 138, which is similar to the concave portion 38 and is again situated above an upper surface 118 of the respective wing 114a, 114b. In this embodiment, the lower surface again features fore and aft convex regions 140, 142, similar to the first embodiment.

As such, the lower surface of the tanks 126a, 126b are relatively similar to the first embodiment. However, the upper surface differs, consisting of a single convex surface 143 extending in the longitudinal, vertical plane, lacking the concave surfaces. Accordingly, the tanks 126a, 126b may form a lifting surface, recovering some of the lift lost by the wing.

The tanks 126a, 126b also differ from the tank 26a, 26b, in that they are approximately symmetrical in the horizontal, longitudinal axis, as shown in figure 3b, with side surfaces 152, 158 being wholly concave. Such a design may be more structurally efficient where the tanks 126a, 126 hold a pressurised fluid. Simulations have shown that the aircraft 110 has similar aerodynamic performance to the aircraft 10, having only slightly increased drag relative to that aircraft.

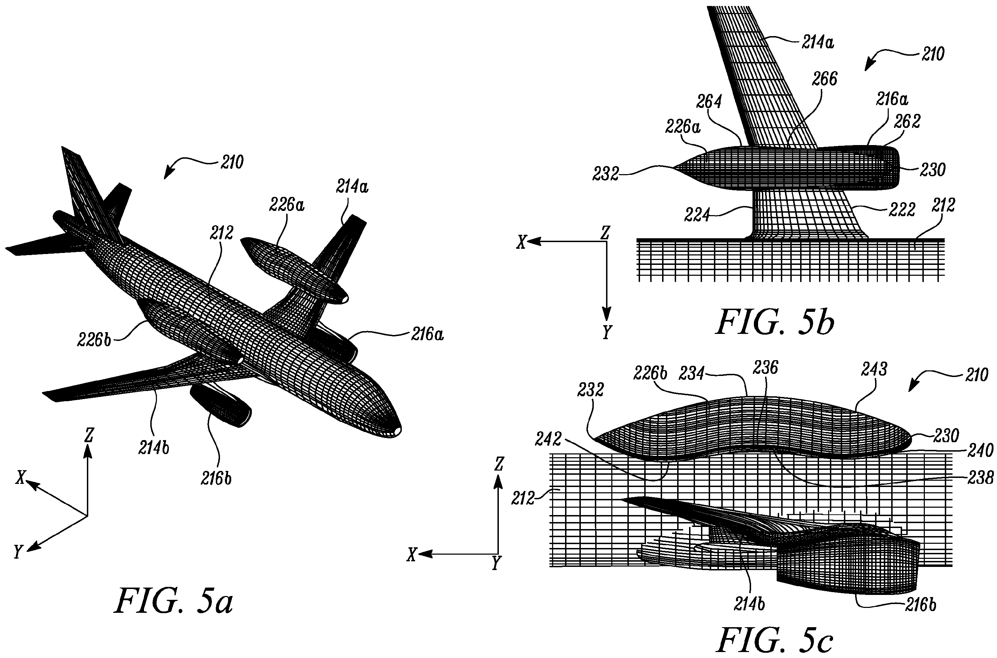

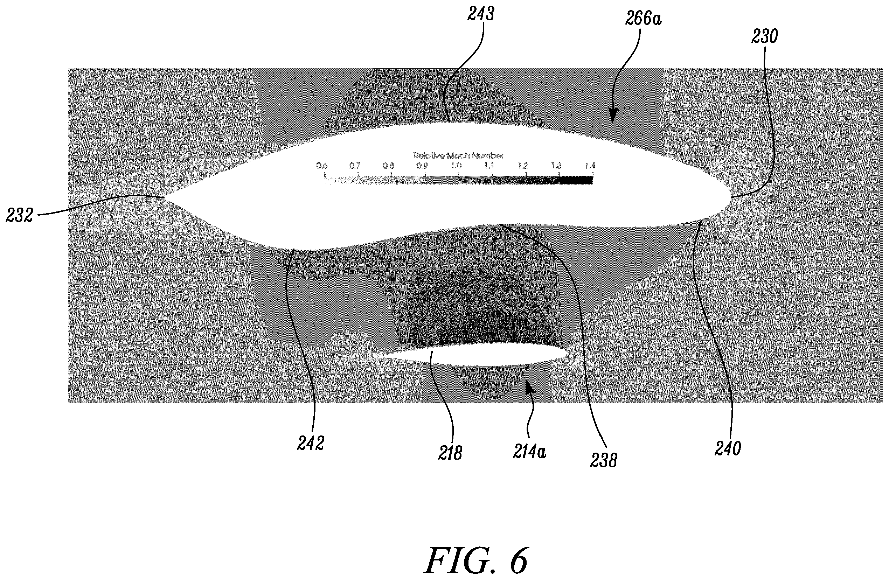

Figures 5a to 5c and 6 illustrate a further alternative tank 126a, 126b design, which are generally similar in design to each other, and are mounted to a third aircraft 210 having a fuselage 212 and wings 214a, 214b. The third aircraft 210 is of similar configuration to the first and second aircraft 10, 110, and has wings 214a, 214b similar to the wings 114a, 114b of the second aircraft 110.

As can be seen in particular in figures 5a,b and 5c, the tanks 226a, 226b each have leading and trailing edges 230, 232 and upper and lower surfaces 134, 136.

The lower surface 236 features a concave portion 238, which is similar to the concave portions 38, 138 and is again situated above an upper surface 218 of the respective wing 214a, 214b. In this embodiment, the lower surface236 again features fore and aft convex regions 240, 242, similar to the first embodiment. However, in this embodiment, the convex surface extends further forward than in the previous embodiments, extending to, or almost to, the leading edge 222 of the wing 214a, 214b. the convex portion 238 also flattens somewhat in a forward direction relative to a mid-chord region, such that a radius of curvature increases forward of the mid-chord portion.

The upper surface 234 is similar to that of the second embodiment, consisting of a single convex surface 243 extending in the longitudinal, vertical plane, lacking the concave surfaces of the first embodiment. Accordingly, the tanks 126a, 126b again form a cambered lifting surface.

The tanks 126a, 126b also differ from the tank 26a, 26b, in that they are approximately symmetrical in the horizontal, longitudinal axis, as shown in figure 3b, with side surfaces 152, 158. The side surfaces comprise fore and aft convex portions 262, 164, which are connected by a flat, conic surface 266, which increases in diameter in a rearward direction. Such a design may provide an improved compromise between the aerodynamic performance of the first embodiment, and the structural performance of the second embodiment. The aerodynamic performance of the tank design can be seen in figure 6, where a similar effect of reduced shock formation can be seen.

Various changes could be made to the design, while remaining within the scope of the invention as defined in the claims. For instance, different wing designs and aircraft designs could be employed. The aircraft could comprise a high-wing truss-braced architecture, such as the Boeing Truss-Braced Wing design embodied in the Boeing X-66, which may feature a high aspect ratio. Alternatively, the aircraft could comprise a blended wing-body type aircraft.

The tanks could be installed on different parts of the wing, such as closer toward the tips of the wing, or closer to the wing root. The engines could be of an open-rotor type.

## Claims

1. An aircraft (10) comprising a wing (14a, 14b) and a fuel tank (26a, 26b) mounted above the wing (14a, 14b), spaced from an upper surface (18) of the wing (14a, 14b); wherein
a first portion of a (38) lower surface (36) of the tank (26a, 26b) comprises a concave profile extending in a longitudinal direction above a convex upper surface portion (18) of the wing (14a, 14b); and
the fuel tank (26a, 26b) comprises a second portion (40) of the lower surface of the tank forward of the first portion (38), which comprises a convex profile in a longitudinal direction; **characterised in that**:
the lowermost portion of the second portion (40) of the lower surface is provided at a longitudinal position forward of a leading edge (22) of the wing (14a, 14b).

2. An aircraft according to claim 1, wherein the fuel tank (26a, 26b) is configured to store one of hydrogen and liquid methane.

3. An aircraft according to claim 2, wherein the fuel tank (26a, 26b) is configured to store the fuel as a liquid.

4. An aircraft according to any of the preceding claims, wherein the fuel tank (26a, 26b) comprises a third portion (42) of the lower surface of the tank aft of the first portion (38), which comprises a convex profile in a longitudinal direction.

5. An aircraft according to claim 4, wherein a lowermost portion of the third portion (42) of the lower surface is provided at a longitudinal position aft of a trailing edge (24) of the wing (14a, 14b).

6. An aircraft according to any of the preceding claims, wherein the fuel tank (26a, 26b) comprises a first portion (43) of an upper surface comprising a convex portion located above a convex portion (18) of the upper surface of the wing (14a, 14b).

7. An aircraft according to claim 6, wherein the fuel tank (26a, 26b) comprises a second portion (44) of the upper surface (34) of the tank forward of the first portion (43), which comprises a concave profile in a longitudinal direction, and wherein the lowermost portion of the second portion of the upper surface (34) is provided at a longitudinal position forward of the leading edge of the wing (22).

8. An aircraft according to claim 6 or claim 7, wherein the fuel tank (26a, 26b) comprises a third portion(46) of the upper surface (34) of the tank (26a, 26b) aft of the first portion (43), which comprises a concave profile in a longitudinal direction, and wherein a lowermost portion of the third portion (43) of the upper surface is provided at a longitudinal position aft of the trailing edge (24) of the wing (14, 14b).

9. An aircraft according to any of the preceding claims, wherein the fuel tank (26a, 26b) comprises a concave side surface (52, 58) when viewed from above.

10. An aircraft according to claim 9, wherein the fuel tank (26a, 26b) comprises a first concave side surface (52) facing a side of a fuselage (12) of the aircraft, and comprises a second concave side surface (58) on an opposite side of the fuel tank from the first side surface (52).

11. An aircraft according to claim 10, wherein the first concave side surface (52) is provided forward of the second concave side surface (58).

12. An aircraft according to any of the preceding claims, wherein the upper fuel tank surface (143) consists of a convex curve in a longitudinal direction, with no concave surface.

## Patentansprüche

1. Luftfahrzeug (10), umfassend einen Flügel (14a, 14b) und einen Kraftstofftank (26a, 26b), der über dem Flügel (14a, 14b) montiert ist, beabstandet von einer oberen Oberfläche (18) des Flügels (14a, 14b); wobei
ein erster Abschnitt einer (38) unteren Oberfläche (36) des Tanks (26a, 26b) ein konkaves Profil umfasst, das sich in einer Längsrichtung über einem konvexen oberen Oberflächenabschnitt (18) des Flügels (14a, 14b) erstreckt; und
der Kraftstofftank (26a, 26b) einen zweiten Abschnitt (40) der unteren Oberfläche des Tanks vor dem ersten Abschnitt (38) umfasst, der ein konvexes Profil in einer Längsrichtung umfasst; **dadurch gekennzeichnet, dass**:
der unterste Abschnitt des zweiten Abschnitts (40) der unteren Oberfläche an einer Längsposition vor einer Vorderkante (22) des Flügels (14a, 14b) bereitgestellt ist.

2. Luftfahrzeug nach Anspruch 1, wobei der Kraftstofftank (26a, 26b) dazu konfiguriert ist, eines von Wasserstoff und flüssigem Methan zu speichern.

3. Luftfahrzeug nach Anspruch 2, wobei der Kraftstofftank (26a, 26b) dazu konfiguriert ist, den Kraftstoff als Flüssigkeit zu speichern.

4. Luftfahrzeug nach einem der vorhergehenden Ansprüche, wobei der Kraftstofftank (26a, 26b) einen dritten Abschnitt (42) der unteren Oberfläche des Tanks hinter dem ersten Abschnitt (38) umfasst, der ein konvexes Profil in einer Längsrichtung umfasst.

5. Luftfahrzeug nach Anspruch 4, wobei ein unterster Abschnitt des dritten Abschnitts (42) der unteren Oberfläche an einer Längsposition hinter einer Hinterkante (24) des Flügels (14a, 14b) bereitgestellt ist.

6. Luftfahrzeug nach einem der vorhergehenden Ansprüche, wobei der Kraftstofftank (26a, 26b) einen ersten Abschnitt (43) einer oberen Oberfläche umfasst, der einen konvexen Abschnitt umfasst, der sich über einem konvexen Abschnitt (18) der oberen Oberfläche des Flügels (14a, 14b) befindet.

7. Luftfahrzeug nach Anspruch 6, wobei der Kraftstofftank (26a, 26b) einen zweiten Abschnitt (44) der oberen Oberfläche (34) des Tanks vor dem ersten Abschnitt (43) umfasst, der ein konkaves Profil in einer Längsrichtung umfasst, und wobei der unterste Abschnitt des zweiten Abschnitts der oberen Oberfläche (34) an einer Längsposition vor der Vorderkante des Flügels (22) bereitgestellt ist.

8. Luftfahrzeug nach Anspruch 6 oder Anspruch 7, wobei der Kraftstofftank (26a, 26b) einen dritten Abschnitt (46) der oberen Oberfläche (34) des Tanks (26a, 26b) hinter dem ersten Abschnitt (43) umfasst, der ein konkaves Profil in einer Längsrichtung umfasst, und wobei ein unterster Abschnitt des dritten Abschnitts (43) der oberen Oberfläche an einer Längsposition hinter der Hinterkante (24) des Flügels (14, 14b) bereitgestellt ist.

9. Luftfahrzeug nach einem der vorhergehenden Ansprüche, wobei der Kraftstofftank (26a, 26b) eine konkave Seitenfläche (52, 58) umfasst, wenn er von oben betrachtet wird.

10. Luftfahrzeug nach Anspruch 9, wobei der Kraftstofftank (26a, 26b) eine erste konkave Seitenfläche (52) umfasst, die einer Seite eines Rumpfes (12) des Luftfahrzeugs zugewandt ist, und eine zweite konkave Seitenfläche (58) auf einer der ersten Seitenfläche (52) gegenüberliegenden Seite des Kraftstofftanks umfasst.

11. Luftfahrzeug nach Anspruch 10, wobei die erste konkave Seitenfläche (52) vor der zweiten konkaven Seitenfläche (58) bereitgestellt ist.

12. Luftfahrzeug nach einem der vorhergehenden Ansprüche, wobei die obere Kraftstofftankoberfläche (143) aus einer konvexen Kurve in einer Längsrichtung, ohne konkave Oberfläche, besteht.

## Revendications

1. Aéronef (10) comprenant une aile (14a, 14b) et un réservoir de carburant (26a, 26b) monté au-dessus de l'aile (14a, 14b), espacé d'une surface supérieure (18) de l'aile (14a, 14b) ; dans lequel
une première partie d'une (38) surface inférieure (36) du réservoir (26a, 26b) comprend un profil concave s'étendant dans une direction longitudinale au-dessus d'une partie de surface supérieure convexe (18) de l'aile (14a, 14b) ; et
le réservoir de carburant (26a, 26b) comprend une deuxième partie (40) de la surface inférieure du réservoir en avant de la première partie (38), qui comprend un profil convexe dans une direction longitudinale ; **caractérisé en ce que** :
la partie la plus basse de la deuxième partie (40) de la surface inférieure est ménagée au niveau d'une position longitudinale en avant d'un bord d'attaque (22) de l'aile (14a, 14b).

2. Aéronef selon la revendication 1, dans lequel le réservoir de carburant (26a, 26b) est conçu pour stocker l'un d'hydrogène ou de méthane liquide.

3. Aéronef selon la revendication 2, dans lequel le réservoir de carburant (26a, 26b) est conçu pour stocker le carburant sous forme de liquide.

4. Aéronef selon l'une quelconque des revendications précédentes, dans lequel le réservoir de carburant (26a, 26b) comprend une troisième partie (42) de la surface inférieure du réservoir en arrière de la première partie (38), qui comprend un profil convexe dans une direction longitudinale.

5. Aéronef selon la revendication 4, dans lequel une partie la plus basse de la troisième partie (42) de la surface inférieure est ménagée au niveau d'une position longitudinale en arrière d'un bord de fuite (24) de l'aile (14a, 14b).

6. Aéronef selon l'une quelconque des revendications précédentes, dans lequel le réservoir de carburant (26a, 26b) comprend une première partie (43) d'une surface supérieure comprenant une partie convexe située au-dessus d'une partie convexe (18) de la surface supérieure de l'aile (14a, 14b).

7. Aéronef selon la revendication 6, dans lequel le réservoir de carburant (26a, 26b) comprend une deuxième partie (44) de la surface supérieure (34) du réservoir en avant de la première partie (43), qui comprend un profil concave dans une direction longitudinale, et dans lequel la partie la plus basse de la deuxième partie de la surface supérieure (34) est ménagée au niveau d'une position longitudinale en avant du bord d'attaque de l'aile (22).

8. Aéronef selon la revendication 6 ou la revendication 7, dans lequel le réservoir de carburant (26a, 26b) comprend une troisième partie (46) de la surface supérieure (34) du réservoir (26a, 26b) en arrière de la première partie (43), qui comprend un profil concave dans une direction longitudinale, et dans lequel une partie la plus basse de la troisième partie (43) de la surface supérieure est ménagée au niveau d'une position longitudinale en arrière du bord de fuite (24) de l'aile (14, 14b).

9. Aéronef selon l'une quelconque des revendications précédentes, dans lequel le réservoir de carburant (26a, 26b) comprend une surface latérale concave (52, 58) lorsqu'il est vu de dessus.

10. Aéronef selon la revendication 9, dans lequel le réservoir de carburant (26a, 26b) comprend une première surface latérale concave (52) faisant face à un côté d'un fuselage (12) de l'aéronef, et comprend une seconde surface latérale concave (58) d'un côté opposé du réservoir de carburant par rapport à la première surface latérale (52).

11. Aéronef selon la revendication 10, dans lequel la première surface latérale concave (52) est ménagée en avant de la seconde surface latérale concave (58).

12. Aéronef selon l'une quelconque des revendications précédentes, dans lequel la surface supérieure du réservoir de carburant (143) est constituée d'une courbe convexe dans une direction longitudinale, sans surface concave.
